# EUROPÄISCHE PATENTSCHRIFT

(11) **EP 3 770 785 B1**
(45) Veröffentlichungstag und Bekanntmachung des Hinweises auf die Patenterteilung: **11.10.2023**
(21) Anmeldenummer: 19188302.4
(22) Anmeldetag: 25.07.2019
(51) Int. Cl.: H04L 9/40, H02J 4/00, G05B 19/042, G06F 21/55, H02J 13/00

(54) **VERFAHREN ZUM ERKENNEN VON INJEKTIONEN FALSCHE DATEN "BAD DATA" IN EINEM INDUSTRIELLEN STEUERSYSTEM**
METHOD FOR DETECTING BAD DATA INJECTIONS ATTACKS IN AN INDUSTIAL CONTROL SYSTEM
PROCÉDÉ DE DÉTECTION D'UNE ATTAQUE PAR INJECTION DE DONNÉES ERRONÉES "BAD DATA" DANS UN SYSTÈME DE COMMANDE INDUSTRIEL

(43) Veröffentlichungstag der Anmeldung: 27.01.2021
(73) Patentinhaber: Siemens Aktiengesellschaft, 80333 München (DE)
(72) Erfinder: Duckheim, Mathias, 91052 Erlangen (DE); Fröhner, Wiebke, 92224 Amberg (DE); Werner, Thomas, 91126 Rednitzhembach (DE)
(74) Vertreter: Siemens Patent Attorneys

(56) Entgegenhaltungen:
- CN-A- 104 573 510
- CN-A- 109 818 349
- GB-A- 2 558 534
- US-A1- 2018 260 561
- OERTER CHRISTIAN ET AL: "LV-grid automation system - A technology re", 2014 IEEE PES GENERAL MEETING | CONFERENCE & EXPOSITION, IEEE, 27. Juli 2014 (2014-07-27), Seiten 1-5, XP032670577, DOI: 10.1109/PESGM.2014.6939827 [gefunden am 2014-10-29]
- YOUSSEF EL-NASSER S ET AL: "False Data Injection Attacks Against State Estimation in Smart Grids: Challenges and Opportunities", 2018 IEEE CANADIAN CONFERENCE ON ELECTRICAL & COMPUTER ENGINEERING (CCECE), IEEE, 13. Mai 2018 (2018-05-13), Seiten 1-5, XP033395149, DOI: 10.1109/CCECE.2018.8447683 [gefunden am 2018-08-27]
- ESMALIFALAK MOHAMMAD ET AL: "Detecting Stealthy False Data Injection Using Machine Learning in Smart Grid", IEEE SYSTEMS JOURNAL, IEEE, US, Bd. 11, Nr. 3, September 2017 (2017-09), Seiten 1644-1652, XP011661186, ISSN: 1932-8184, DOI: 10.1109/JSYST.2014.2341597 [gefunden am 2017-09-27]

## Beschreibung

Die Erfindung bezieht sich auf ein Verfahren zum Betreiben eines technischen oder nichttechnischen Systems, wobei bei dem Verfahren von zumindest einer ersten Einrichtung des Systems zu zumindest einer zweiten Einrichtung zumindest eine Information erster Art übermittelt wird, die sich auf das System bezieht und vom jeweiligen Systemzustand des Systems abhängt.

Zur Führung technischer Systeme werden heutzutage immer mehr Lösungen eingesetzt, bei denen zentrale IT-Systeme Informationen von Geräten über private und öffentliche Kommunikationsnetze erhalten. Die zentralen Systeme nehmen diese Informationen auf, verarbeiten diese und senden ggf. neue Informationen an die Geräte zurück. Für die Aufgaben der zentralen IT-Systeme ist es sehr wichtig, dass diese Daten nicht von Dritten manipuliert werden. Falsche Daten können zu fehlerhaften Reaktionen des zentralen IT-Systems führen, welche die Funktionsfähigkeit und die Sicherheit des technischen oder nichttechnischen Systems gefährden.

Manipulationen der Daten können Dritte z. B. über "Man-inthe-Middle" (Mann in der Mitte)-Angriffe bewerkstelligen, bei denen sich der Angreifer zwischen das zentrale IT-System und die Geräte schiebt. Gegenüber den Geräten gibt der Angreifer sich dabei als das zentrale IT-System aus, gegenüber dem zentralen IT-System als Gerät. Er verfälscht den Informationsstrom zwischen den Geräten und dem zentralen IT-System mit falschen Daten (sogenannte "False Data Injection Attacs" (FDIA)) .

Die Betreiber dieser IT-Systeme treffen eine Reihe von Vorkehrungen, um mit dieser Bedrohung umzugehen. Im Wesentlichen konzentrieren sie sich darauf, diese Angriffe zu verhindern. Jüngste Beispiele zeigen aber, dass solche Angriffe nie ganz verhindert werden können.

Zentrale IT-System verfügen deshalb über Prüfungsmechanismen, mit denen fehlerbehaftete Eingangsinformationen erkannt werden können. Neueste Veröffentlichungen zeigen aber, dass die bekannten Verfahren keine umfassende Sicherheit bieten. Selbst ohne komplette Kenntnis des Datenmodells und der Zusammenhänge des technischen Systems können Angriffe so gestaltet werden, dass fehlerbehafteten Informationen nicht immer bemerkt werden.

Insbesondere bei IOT (Internet of Things)-Systemen sind Angriffe denkbar, bei denen die beteiligten Geräte veranlasst werden, bei einem Befehl nicht die aktuellen Werte an das zentrale IT-System zu senden, sondern Informationen, die sie zu einem definierten Zeitpunkt in der Vergangenheit gesammelt haben. Damit wäre das Abbild des Prozesses für das zentrale IT-System zunächst plausibel und konsistent, auch wenn es mit dem aktuellen Prozesszustand nicht übereinstimmt.

Als einschlägige Literatur zum Thema "False Data Injection" seien die folgenden Veröffentlichungen beispielhaft genannt:
[1] Ashrafuzzaman, Mohammad; Chakhchoukh, Yacine; Jillepalli, Ananth A.; Tosic, Predrag T.; de Leon, Daniel Conte; Sheldon, Frederick T.; Johnson, Brian K. Detecting Stealthy False Data Injection Attacks in Power Grids Using Deep Learning 2018 14th International Wireless Communications & Mobile Computing Conference (IWCMC)
[2] Youssef, E.-N.S.; Labeau, F., False Data Injection Attacks Against State Estimation in Smart Grids: Challenges and Opportunities, 2018 IEEE Canadian Conference on Electrical & Computer Engineering (CCECE) (2018), p. 1 - 5
[3] Esmalifalak, M.; Lanchao Liu; Nam Nguyen; Rong Zheng; Zhu Han, Detecting Stealthy False Data Injection Using Machine Learning in Smart Grid, IEEE Systems Journal(2017) vol. 11 Issue 3 p. 1644 - 1652
[4] Deng, R.; Zhuang, P.; Liang, H., False Data Injection Attacks Against State Estimation in Power Distribution Systems, IEEE Transactions on Smart Grid vol. PP Issue 99 p. 1 - 1
[5] Qinxue Li; Delong Cui; Mei Liu, Data-Driven False Data Injection Attacks on State Estimation in Smart Grid, 2018 37th Chinese Control Conference (CCC) (2018) p. 6190 - 6195
[6] Xuan Liu; Zuyi Li, Local Topology Attacks in Smart Grids, IEEE Transactions on Smart Grid(2017) vol. 8 Issue 6 p. 2617 - 2626
[7] Jinsub Kim; Lang Tong, On Topology Attack of a Smart Grid: Undetectable Attacks and Countermeasures IEEE Journal on Selected Areas in Communications(2013) vol. 31 Issue 7 p. 1294 - 1305.

Ferner ist ein gattungsgemäßes Verfahren zur Erkennung von Datenmanipulationen bekannt aus der Druckschrift US 2018/260561 A1. Darüber hinaus sind die Druckschriften CN 104 573 510 A, GB 2 558 534 A und CN 109 818 349 A bekannt.

Weiterhin sind die folgenden Veröffentlichungen bekannt: "LVgrid automation system - A technology review" von Christian Oerter et al., 2014 IEEE PES GENERAL MEETING I CONFERENCE & EXPOSITION, IEEE, 27. Juli 2014, Seiten 1-5, und
"False Data Injection Attacks Against State Estimation in Smart Grids: Challenges and Opportunities" von Yousseff El-Nasser et al., 2018 IEEE CANADIAN CONFERENCE ON ELECTRICAL & COMPUTER ENGINEERING (CCECE), IEEE, 13. Mai 2018, Seiten 1-5, und
"Detecting Stealthy False Data Injection Using Machine Learning in Smart Grid" von Mohammad Esmalifalak et al.,IEEE SYSTEMS JOURNAL, IEEE, Bd. 11, Nr. 3, 1. September 2017, Seiten 1644-1652.

Der Erfindung liegt die Aufgabe zugrunde, ein Verfahren zum Betreiben technischer oder nichttechnischer Systeme anzugeben, bei dem ein etwaiger Datenangriff auf das System sehr zuverlässig erkannt werden kann.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass die eingangs genannte zweite (Informationen erster Art empfangende) Einrichtung zumindest eine Information zweiter Art, die weder von der ersten Einrichtung noch einer anderen Einrichtung des Systems stammt, also aus einer anderen Quelle als dem System kommt, zur Schätzung des Systemzustands heranzieht, anhand des geschätzten Systemzustands prüft, ob die empfangene Information mit dem geschätzten Systemzustand in einem vorgegebenen Maße korrespondiert, und im Falle einer Korrespondenz im vorgegebenen Maße die Information als vertrauenswürdig ansieht und andernfalls ein einen möglichen Datenangriff anzeigendes Warnsignal erzeugt.

Ein wesentlicher Vorteil des erfindungsgemäßen Verfahrens ist darin zu sehen, dass Einrichtungen, die Informationen erster Art empfangen, bei dem erfindungsgemäßen Verfahren anhand von Informationen zweiter Art eine Systemschätzung durchführen können, die eine Überprüfung der empfangenen Informationen erster Art ermöglicht. Ergibt die Prüfung eine Abweichung über ein vorgegebenes Maß, so kann auf einen Datenangriff geschlossen und ein entsprechendes Warnsignal erzeugt werden. Der Erfindungsgedanke basiert also anschaulich beschrieben auf einem digitalen "Zwilling" zur Schätzung des Systemzustands, der parallel zum zu schützenden System mitläuft, die vom Prozess zu liefernden Messwerte eigenständig schätzt und dabei Datenquellen verwendet, die selbst nicht aus dem Prozess kommen.

Besonders vorteilhaft ist es, wenn das System eine Vielzahl an ersten Einrichtungen umfasst und die zweite Einrichtung auf der Basis der Informationen erster Art, die sie von der Vielzahl an ersten Einrichtungen erhält, einen Ist-Systemzustand ermittelt, diesen mit dem geschätzten Systemzustand vergleicht und im Falle einer Übereinstimmung der beiden Systemzustände im vorgegebenen Maße die Information als vertrauenswürdig ansieht und andernfalls das Warnsignal erzeugt.

Die Informationen zweiter Art sind vorzugsweise bezogen auf das System exogene, also nicht systemeigene bzw. nicht vom oder in dem System erhobene, Informationen.

Vorteilhaft ist es, wenn die Information erster Art zumindest einen Messwert umfasst, der von einem Messgerät bzw. einer Messeinrichtung des Systems gemessen worden ist.

Die zweite Einrichtung bildet vorzugsweise einen Bestandteil des technischen Systems, insbesondere eine Leitzentrale.

Die Information erster Art umfasst vorzugsweise zumindest einen Messwert, den die zweite Einrichtung zur Steuerung und/oder Überwachung des Systems verwertet.

Alternativ kann vorgesehen sein, dass die zweite Einrichtung ein Feldgerät ist, beispielsweise eine Stelleinrichtung ist oder aufweist, und die Information erster Art zumindest einen Stellbefehl umfasst, den die zweite Einrichtung ausführen soll.

Die zweite Einrichtung führt die Schätzung des Systemzustands vorzugsweise auf der Basis der zumindest einen Information zweiter Art und eines angelernten Systems künstlicher Intelligenz durch, das auf der Basis verschiedener Systemzustände und korrespondierender, als vertrauenswürdig angesehener Informationen angelernt worden ist.

Alternativ oder zusätzlich kann vorgesehen sein, dass die zweite Einrichtung die Schätzung des Systemzustands auf der Basis der zumindest einen Information zweiter Art und eines fest programmierten Systembeschreibungsmodells durchführt.

Als besonders vorteilhaft wird es vorgesehen, wenn zumindest eine Information erster Art von der zweiten Einrichtung zu der ersten Einrichtung und/oder zu zumindest einer weiteren Einrichtung übermittelt wird, und die erste bzw. die zumindest eine weitere Einrichtung zumindest eine Information zweiter Art zur Schätzung des Systemzustands heranzieht, anhand des geschätzten Systemzustands prüft, ob die empfangene Information mit dem geschätzten Systemzustand in einem vorgegebenen Maße korrespondiert, und im Falle einer Korrespondenz im vorgegebenen Maße die Information als vertrauenswürdig ansieht und andernfalls ein einen Datenangriff anzeigendes Warnsignal erzeugt. Bei dieser Ausgestaltung kann die Datenübertragung zwischen der ersten und zweiten Einrichtung also bidirektional sein.

Die Information erster Art, die die erste Einrichtung zu der zweiten Einrichtung übermittelt, umfasst vorzugsweise zumindest einen Messwert, der von einem Messgerät (Messeinrichtung) des Systems gemessen worden ist, und die Information erster Art, die die zweite Einrichtung zu der ersten und/oder der zumindest einen weiteren Einrichtung übermittelt, umfasst vorzugsweise zumindest einen Stellbefehl, den die erste bzw. die zumindest eine weitere Einrichtung ausführen soll. Bei dem Stellbefehl kann es sich im Falle eines Schalters beispielsweise um einen Schaltbefehl und im Falle einer Messeinrichtung beispielsweise um einen Umstellbefehl zum Umstellen eines Messbereichs oder Umstellen einer zu messenden Messgröße (Strom, Spannung) handeln.

Die erste(n), zweite(n) und/oder weitere(n) Einrichtung(en) führen die Schätzung des Systemzustands vorzugsweise auf der Basis eines angelernten Systems künstlicher Intelligenz durch, das auf der Basis verschiedener Systemzustände und korrespondierender, als vertrauenswürdig angesehener Informationen angelernt worden ist. Alternativ oder zusätzlich kann vorgesehen sein, dass die genannten Einrichtungen die Schätzung des Systemzustands auf der Basis eines fest programmierten Systembeschreibungsmodells durchführen.

Das System umfasst vorzugsweise eine Anlerneinrichtung, die das Anlernen von Systemen künstlicher Intelligenz durchführt, sei es für eine der genannten Einrichtungen, mehrere der genannten Einrichtungen oder alle Einrichtungen des Systems, die Informationen erster Art von einer anderen Einrichtung des Systems erhalten.

Die Anlerneinrichtung ist vorzugsweise in der oder einer der zweiten Einrichtungen implementiert. Besonders bevorzugt ist die Anlerneinrichtung in einer Leitzentrale des Systems implementiert.

Das System ist vorzugsweise ein Energieverteil- oder Energieversorgungssystem. Die erste(n), zweite(n) und übrige(n) Einrichtungen bilden vorzugsweise Komponenten des Energieverteil- oder Energieversorgungssystems.

Die Erfindung bezieht sich darüber hinaus auf eine Einrichtung für ein technisches oder nichttechnisches System, wobei die Einrichtung geeignet ist, Informationen erster Art zu empfangen, die sich auf das System beziehen und vom jeweiligen Systemzustand des Systems abhängen.

Erfindungsgemäß ist vorgesehen, dass die Einrichtung dazu ausgestaltet ist, zumindest eine Information zweiter Art, die aus einer anderen Quelle als dem System kommt, zur Schätzung des Systemzustands heranzuziehen, anhand des geschätzten Systemzustands zu prüfen, ob die empfangene Information mit dem geschätzten Systemzustand in einem vorgegebenen Maße korrespondiert, und im Falle einer Korrespondenz im vorgegebenen Maße die Information als vertrauenswürdig anzusehen und andernfalls ein einen möglichen Datenangriff anzeigendes Warnsignal zu erzeugen.

Bezüglich der Vorteile der erfindungsgemäßen Einrichtung sowie bezüglich vorteilhafter Ausgestaltungen der erfindungsgemäßen Einrichtung sei auf die obigen Ausführungen im Zusammenhang mit dem erfindungsgemäßen Verfahren und dessen vorteilhafte Ausgestaltungen verwiesen.

Die Erfindung wird nachfolgend anhand von Ausführungsbeispielen näher erläutert; dabei zeigen beispielhaft
- Figur 1: ein Ausführungsbeispiel für ein technisches System, bei dem eine Leitzentrale mit einem angelernten System künstlicher Intelligenz ausgestattet ist, wobei anhand dieses technischen Systems ein Ausführungsbeispiel für ein erfindungsgemäßes Verfahren erläutert wird,
- Figur 2: ein Ausführungsbeispiel für ein technisches System, bei dem eine Leitzentrale mit einer Anlerneinrichtung zum Anlernen eines anzulernenden Systems künstlicher Intelligenz ausgestattet ist, wobei anhand dieses technischen Systems ein weiteres Ausführungsbeispiel für ein erfindungsgemäßes Verfahren beschrieben wird, und
- Figur 3: ein Ausführungsbeispiel für ein System, bei dem auch Feldgeräte mit angelernten Systemen künstlicher Intelligenz ausgestattet sind, um Stellbefehle einer Leitzentrale zu überprüfen.

In den Figuren werden der Übersicht halber für identische oder vergleichbare Komponenten stets dieselben Bezugszeichen verwendet.

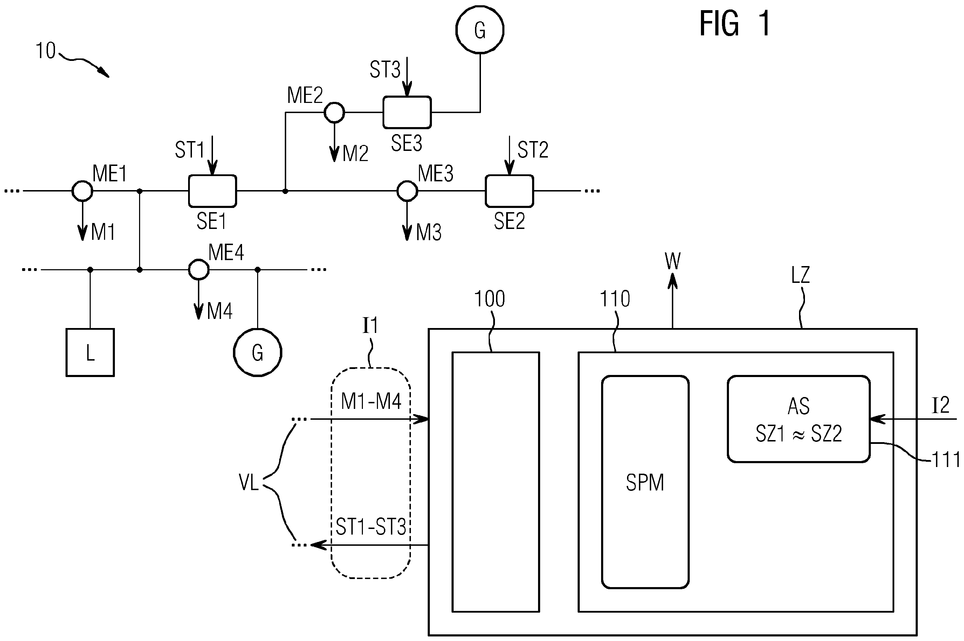

Die Figur 1 zeigt ein Ausführungsbeispiel für ein System 10, das durch einen Netzabschnitt eines elektrischen Energieverteil- oder Energieversorgungssystems bzw. Energieverteil- oder Energieversorgungsnetzes gebildet ist. Das System 10 weist unter anderem Generatoren G, die elektrische Energie einspeisen, und elektrische Lasten L, die elektrische Energie aufnehmen oder verbrauchen, auf.

Das System 10 ist mit einer Vielzahl an ersten Einrichtungen ausgestattet, die bei dem Ausführungsbeispiel gemäß Figur 1 durch Feldgeräte in Form von Messeinrichtungen ME1, ME2, ME3 und ME4 gebildet werden. Die Messeinrichtungen ME1 bis ME4 erzeugen Messwerte M1 bis M4, die als Informationen I1 erster Art zu einer zweiten Einrichtung über aus Gründen der Übersicht nur angedeutete Verbindungsleitungen VL übermittelt werden. Die zweite Einrichtung wird bei dem Ausführungsbeispiel gemäß Figur 1 durch eine Leitzentrale LZ gebildet. Bei den Messwerten M1 bis M4 handelt es sich vorzugsweise um Stromwerte, Spannungswerte, Phasenwerte, Leistungswerte oder andere elektrische Messwerte.

Das System 10 gemäß Figur 1 weist darüber hinaus eine Vielzahl an weiteren Einrichtungen auf, die bei dem Ausführungsbeispiel gemäß Figur 1 durch Feldgeräte in Form von Stelleinrichtungen SE1 bis SE3 (z. B Schalter) gebildet werden. Die Stelleinrichtungen SE1 bis SE3 empfangen Stellbefehle ST1 bis ST3, die von der Leitzentrale LZ erzeugt und über die aus Gründen der Übersicht nur angedeuteten Verbindungsleitungen VL zu den Stelleinrichtungen SE1 bis SE3 übertragen werden. Die Stellbefehle ST1 bis ST3 stellen ebenfalls Informationen I1 erster Art dar.

Die Leitzentrale LZ umfasst eine Recheneinrichtung 100 und einen Speicher 110. In dem Speicher 110 ist ein Programmmodul 111 abgespeichert, das bei Ausführung durch die Recheneinrichtung 100 ein angelerntes System AS künstlicher Intelligenz bildet. Das angelernte System AS künstlicher Intelligenz ist auf der Basis als vertrauenswürdig angesehener Informationen angelernt worden.

Das System 10 wird vorzugsweise wie folgt betrieben:
Die Messwerte M1 bis M4 werden als Informationen I1 erster Art von den Messeinrichtungen ME1 bis ME4 zur Leitzentrale LZ übermittelt. Die Leitzentrale LZ ermittelt anhand der Messwerte M1 bis M4, also den Informationen erster Art, einen auf den Messwerten basierenden, also gemessenen Systemzustand, der wegen seines Bezugs auf die systemeigenen Messwerte des Systems 10 auch als Ist-Systemzustand SZ1 bezeichnet werden kann, weil er dem tatsächlichen Systemzustand entsprechen würde, sofern die Messwerte M1 bis M4 unverfälscht bzw. unmanipuliert zu der Leitzentrale LZ übermittelt werden.

Darüber hinaus ermittelt das angelernte System AS anhand von Informationen I2 zweiter Art, die weder von den ersten Einrichtungen (in Figur 1 den Messeinrichtungen ME1 bis ME4) noch von den übrigen Einrichtungen (in Figur 1 den Stelleinrichtungen SE1 bis SE3) stammen, also aus einer anderen Quelle als dem System 10 kommen, einen geschätzten Systemzustand SZ2. Die Informationen I2 zweiter Art können auch als exogene Daten bzw. Informationen bezeichnet werden, weil sie nicht systemeigen sind und nicht vom oder in dem System 10 erhoben worden sind. Bei den Informationen I2 zweiter Art kann es sich beispielsweise um Wetterdaten, Kalenderdaten (Kalendertag, Tageszeit, Jahreszeit, usw.), aktuelle Strompreise, Strompreisprognosen, oder sonstige externe Daten oder Prognosedaten handeln.

Die Schätzung wird auf der Basis angelernter künstlicher Intelligenz, die in dem angelernten System AS implementiert ist, durchgeführt.

Anschließend vergleicht die Leitzentrale LZ, insbesondere das angelernte System AS, den Ist-Systemzustand SZ1 mit dem geschätzten Systemzustand SZ2. Sind die beiden Systemzustände SZ1 und SZ2 ausreichend ähnlich bzw. korrespondieren diese in einem vorgegebenen Maße, so schließt das angelernte System AS bzw. die Leitzentrale LZ daraus, dass die empfangenen Informationen I1 erster Art, hier die Messwerte M1 bis M4, vertrauenswürdig sind und verarbeitet werden dürfen. Ist dies nicht der Fall, wenn also die beiden Systemzustände SZ1 und SZ2 über ein vorgegebenes Maß hinaus voneinander abweichen, so erzeugt die Leitzentrale LZ bzw. deren angelerntes System AS stattdessen ein Warnsignal W, mit dem ein möglicher Datenangriff auf das System 10 angezeigt wird.

Eine Erzeugung und Ausgabe von Stellbefehlen ST1 bis ST3 als Informationen erster Art an die Stelleinrichtungen SE1 bis SE3 erfolgt auf der Basis der Messwerte M1-M4 mittels eines Steuerprogrammmoduls SPM, allerdings vorzugsweise nur dann, wenn kein Warnsignal W erzeugt wird bzw. wenn die Systemzustände SZ1 und SZ2 identisch oder zumindest hinreichend ähnlich sind.

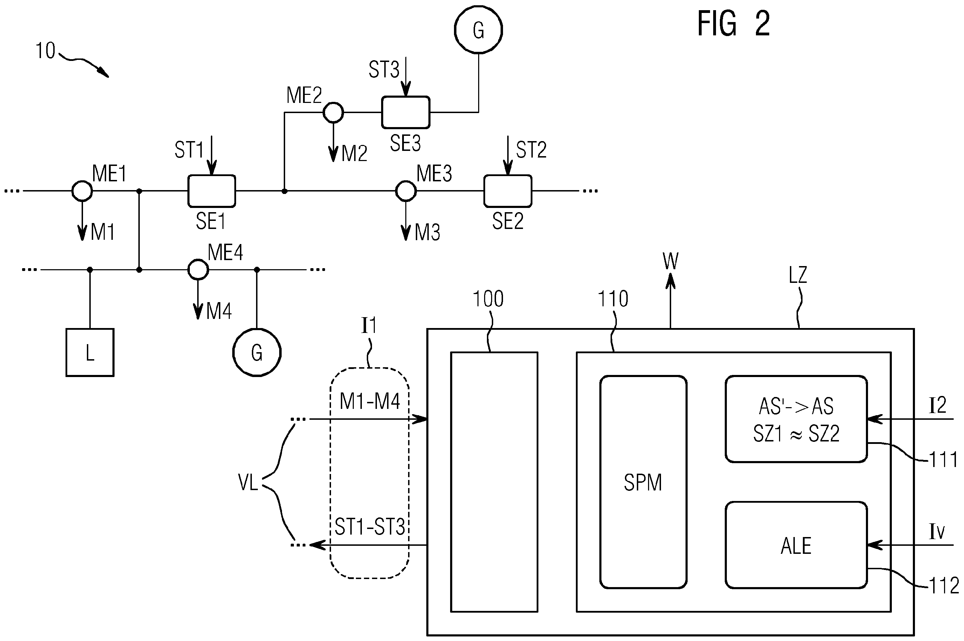

Die Figur 2 zeigt ein zweites Ausführungsbeispiel für ein System 10, bei dem eine Leitzentrale LZ mit einem angelernten System AS künstlicher Intelligenz ausgestattet ist.

Im Unterschied zu dem Ausführungsbeispiel gemäß Figur 1 ist in dem Speicher 110 ein weiteres Softwaremodul 112 abgespeichert, das bei Ausführung durch die Recheneinrichtung 100 eine Anlerneinrichtung ALE bildet. Die Anlerneinrichtung ALE dient dazu, das angelernte System AS zu bilden bzw. die Leitzentrale LZ insgesamt anzulernen, damit diese den geschätzten Systemzustand SZ2 bilden kann, wie dies oben im Zusammenhang mit der Figur 1 erläutert worden ist.

Zum Anlernen eines noch nicht oder noch nicht abschließend angelernten, also noch anzulernenden Systems AS' zieht die Anlerneinrichtung ALE als vertrauenswürdig angesehene Information Iv heran, die anhand des Systems 10 gemäß Figur 2 oder einem identischen oder vergleichbaren anderen System durch Messung und/oder Simulation ermittelt worden und als vertrauenswürdig angesehen werden können und/oder auf ihre Vertrauenswürdigkeit geprüft worden sind.

Nachdem die Anlerneinrichtung ALE das anzulernende System AS' angelernt hat und das angelernte System AS ausgebildet hat, kann letztgenanntes auf der Basis der Informationen I1 erster Art sowie der Informationen I2 zweiter Art arbeiten und die Messwerte M1 bis M4 auswerten und die Stellbefehle ST1 bis ST3 erzeugen, wie dies im Zusammenhang mit der Figur 1 oben erläutert worden ist.

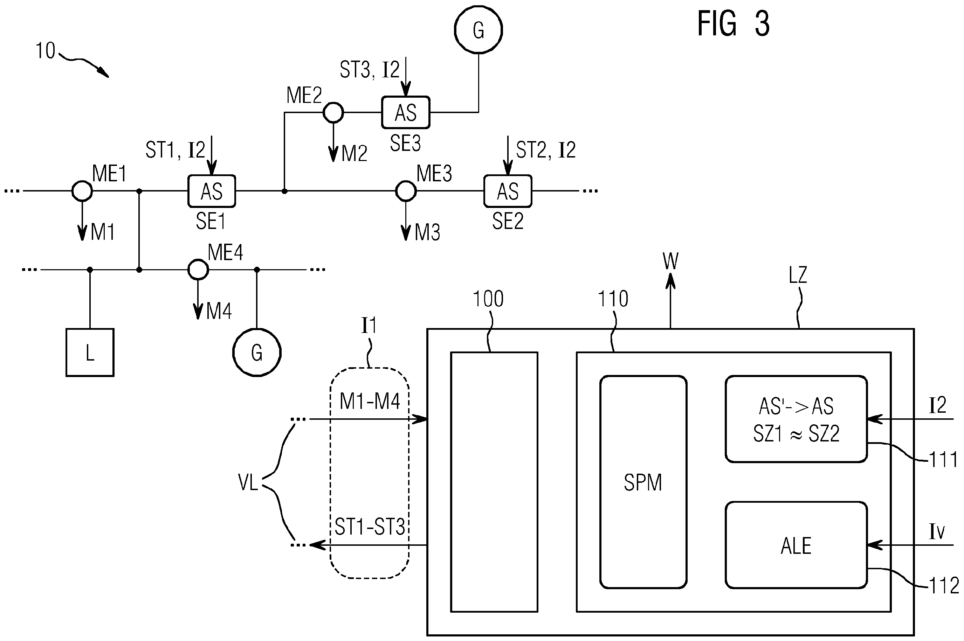

Die Figur 3 zeigt ein System 10, bei dem die Leitzentrale LZ mit einem anzulernenden System AS' bzw. einem bereits angelernten System AS sowie einer Anlerneinrichtung ALE ausgestattet ist. Diesbezüglich gelten die obigen Ausführungen im Zusammenhang mit der Figur 2 entsprechend.

Im Unterschied zu dem Ausführungsbeispiel gemäß Figur 2 sind die die Informationen erster Art empfangenden Feldgeräte (in Figur 1 die Stelleinrichtungen SE1 bis SE3) bei dem Ausführungsbeispiel gemäß Figur 3 zusätzlich mit angelernten Systemen AS künstlicher Intelligenz ausgestattet, die eine Überprüfung der Stellbefehle ST1 bis ST3 feldgeräteseitig ermöglichen.

Konkret können die Stelleinrichtungen SE1 bis SE3 mit Hilfe ihrer angelernten Systeme AS sowie den genannten und/oder anderen Informationen I2 zweiter Art jeweils den jeweiligen Systemzustand unter Bildung eines geschätzten Systemzustands SZ2 schätzen und anhand des geschätzten Systemzustands SZ2 prüfen, ob die empfangene Information I1 erster Art (in Figur 3 die jeweils empfangenen Stellbefehle ST1 bis ST3) mit dem geschätzten Systemzustand in einem vorgegebenen Maße korrespondiert. Ist dies der Fall, so wird die empfangene Information bzw. der empfangene Stellbefehl ST1 bis ST3 als vertrauenswürdig angesehen und ausgeführt; anderenfalls wird ein einen möglichen Datenangriff anzeigendes Warnsignal W erzeugt.

Bei dem Ausführungsbeispiel gemäß Figur 3 erfolgt ein Anlernen bzw. Ausbilden der angelernten Systeme AS für die Stelleinrichtungen SE1 bis SE3 vorzugsweise durch die Anlerneinrichtung ALE der Leitzentrale LZ. Die Anlerneinrichtung ALE dient also nicht nur dazu, das anzulernende System AS' im Softwaremodul 111 anzulernen, um das angelernte System AS auszubilden, sondern darüber hinaus zum Anlernen anzulernender Systeme der Stelleinrichtungen SE1 bis SE3, um auch in diesen angelernte Systeme AS künstlicher Intelligenz zur Verfügung zu stellen. Die Übertragung der angelernten Systems AS kann über die Verbindungsleitungen VL erfolgen.

Die Ausführungsvariante gemäß Figur 3 hat den Vorteil, dass für die Feldgeräte keine anderen bzw. keine weiteren Anlerneinrichtungen vorgesehen werden müssen, da das Anlernen zentral durch die Leitzentrale LZ erfolgt. Alternativ, aber weniger vorteilhaft, können auch individuelle Anlerneinrichtungen für die und/oder in den Feldgeräten bereitgestellt werden.

Im Zusammenhang mit den Figuren 1 bis 3 werden die Stelleinrichtungen SE1 bis SE3 als weitere Einrichtungen bezeichnet, da sie Informationen erster Art von der als zweite Einrichtung bezeichneten Leitzentrale LZ erhalten. Mit Blick auf die Datenübermittlung zwischen der Leitzentrale LZ und den Stelleinrichtungen SE1 bis SE3 könnte man stattdessen auch die als Datensender arbeitende Leitzentrale LZ als erste Einrichtung und die als Datenempfänger arbeitenden Stelleinrichtungen SE1 bis SE3 als zweite Einrichtungen ansehen und als solche bezeichnen, da letztgenannte die Überprüfung des Systemzustands anhand von Informationen zweiter Art durchführen.

Die obigen Ausführungen im Zusammenhang mit den Figuren 1 bis 3 beziehen sich beispielhaft auf ein technisches System in Form eines Netzabschnitts eines elektrischen Energieverteil- oder Energieversorgungssystems. Die obigen Ausführungen sind in entsprechender Weise auf andere technische oder nichttechnische Systeme anwendbar, bei denen von einer sendenden (ersten) Einrichtung zu einer empfangenden (zweiten) Einrichtung Informationen erster Art übermittelt werden, die sich auf das System beziehen und vom jeweiligen Systemzustand des Systems abhängen, und die empfangende (zweite) Einrichtung die Überprüfung des Systemzustands anhand von Informationen zweiter Art durchführt.

Im Zusammenhang mit den Figuren 1 bis 3 wird eine Schätzung des Systemzustands SZ2 anhand von Systemen künstlicher Intelligenz erläutert; alternativ oder zusätzlich kann die Schätzung des Systemzustands, also die Bildung des geschätzten Systemzustands SZ2, auf der Basis eines fest programmierten Systembeschreibungsmodells durchführt werden.

Bei den Ausführungsbeispielen gemäß den Figuren 1 bis 3 werden Daten von den Messeinrichtungen ME1 bis ME4 zu der Leitzentrale LZ übertragen; zusätzlich können Informationen erster Art auch von der Leitzentrale LZ (Einrichtung zweiter Art) an die Messeinrichtungen (also Einrichtungen erster Art) übertragen werden; im letztgenannten Fall ist es vorteilhaft, wenn die Messeinrichtungen als Einrichtungen erster Art eine Datenüberprüfung anhand einer Schätzung des jeweiligen Systemzustands auf der Basis von Informationen zweiter Art durchführen, wie dies oben für die Leitzentrale LZ und die Stelleinrichtungen ST1 bis ST3 erläutert worden ist, um die empfangenen Informationen erster Art auf Unverfälschtheit zu kontrollieren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichen

- 10: System
- 100: Recheneinrichtung
- 110: Speicher
- 111: Programmmodul
- 112: weiteres Softwaremodul

- ALE: Anlerneinrichtung
- AS: angelerntes System künstlicher Intelligenz
- AS': anzulernendes System künstlicher Intelligenz
- G: Generator
- L: elektrische Last
- I1: Informationen erster Art
- I2: Informationen zweiter Art
- Iv: vertrauenswürdige Informationen
- LZ: Leitzentrale (zweite Einrichtung)
- M1: Messwert(e)
- M2: Messwert(e)
- M3: Messwert(e)
- M4: Messwert(e)
- ME1: Messeinrichtung (eine der ersten Einrichtungen)
- ME2: Messeinrichtung (eine der ersten Einrichtungen)
- ME31: Messeinrichtung (eine der ersten Einrichtungen)
- ME4: Messeinrichtung (eine der ersten Einrichtungen)
- SE1: Stelleinrichtung (eine der weiteren Einrichtungen)
- SE2: Stelleinrichtung (eine der weiteren Einrichtungen)
- SE3: Stelleinrichtung (eine der weiteren Einrichtungen)
- SPM: Steuerprogrammmodul
- ST1: Stellbefehl
- ST2: Stellbefehl
- ST3: Stellbefehl
- SZ1: Ist-Systemzustand
- SZ2: geschätzter Systemzustand
- VL: Verbindungsleitungen
- W: Warnsignal

## Patentansprüche

1. Verfahren zum Betreiben eines technischen Systems (10), wobei bei dem Verfahren von zumindest einer ersten Einrichtung des Systems (10) zu zumindest einer zweiten Einrichtung zumindest eine Information (I1) erster Art übermittelt wird, die sich auf das System (10) bezieht und vom jeweiligen Systemzustand des Systems (10) abhängt,
wobei das System ein Energieverteil- oder Energieversorgungssystem ist und die erste und zweite Einrichtung Komponenten des Energieverteil- oder Energieversorgungssystems bilden, und wobei die zweite Einrichtung
- zumindest eine Information (I2) zweiter Art, die weder von der ersten Einrichtung noch einer anderen Einrichtung des Systems (10) stammt, also aus einer anderen Quelle als dem System (10) kommt, zur Schätzung des Systemzustands heranzieht,
- anhand des geschätzten Systemzustands (SZ2) prüft, ob die empfangene Information (I1) mit dem geschätzten Systemzustand (SZ2) in einem vorgegebenen Maße korrespondiert, und
- im Falle einer Korrespondenz im vorgegebenen Maße die Information (I1) als vertrauenswürdig ansieht und andernfalls ein einen möglichen Datenangriff anzeigendes Warnsignal (W) erzeugt,
- **dadurch gekennzeichnet, dass**
- es sich bei den Informationen (I2) zweiter Art um mindestens eine der folgenden Informationen handelt: Wetterdaten, Kalenderdaten, aktuelle Strompreise, Strompreisprognosen, und dass
- zumindest eine andere Information (I1) erster Art von der zweiten Einrichtung zu der ersten Einrichtung und/oder zu zumindest einer weiteren Einrichtung übermittelt wird, und die erste bzw. die zumindest eine weitere Einrichtung
- zumindest eine Information (I2) zweiter Art zur Schätzung des Systemzustands heranzieht,
- anhand des geschätzten Systemzustands (SZ2) prüft, ob die empfangene andere Information (I1) mit dem geschätzten Systemzustand (SZ2) in einem vorgegebenen Maße korrespondiert, und
- im Falle einer Korrespondenz im vorgegebenen Maße die andere Information (I1) erster Art von der zweiten und/oder der weiteren Einrichtung als vertrauenswürdig ansieht und andernfalls ein einen Datenangriff anzeigendes Warnsignal (W) erzeugt, wobei
- die zweite Einrichtung ein Feldgerät des technischen Systems (10) ist und insbesondere eine Stelleinrichtung (SE1-SE3) aufweist, und
- die Information (I1) erster Art zumindest einen Stellbefehl (ST1-ST4) umfasst, den die zweite Einrichtung ausführen soll, allerdings nur dann, wenn kein Warnsignal erzeugt wird.

2. Verfahren nach Anspruch 1,
**dadurch gekennzeichnet, dass**
- das System (10) eine Vielzahl an ersten Einrichtungen umfasst und
- die zweite Einrichtung auf der Basis der Informationen (I1) erster Art, die sie von der Vielzahl an ersten Einrichtungen erhält, einen Ist-Systemzustand (SZ1) ermittelt, diesen mit dem geschätzten Systemzustand (SZ2) vergleicht und im Falle einer Übereinstimmung der beiden Systemzustände (SZ1, SZ2) im vorgegebenen Maße die Information (I1) von der ersten Einrichtung (10) als vertrauenswürdig ansieht und andernfalls das Warnsignal (W) erzeugt.

3. Verfahren nach einem der voranstehenden Ansprüche,
**dadurch gekennzeichnet, dass**
die Information (I1) erster Art zumindest einen Messwert (M1-M4) umfasst, der von einer Messeinrichtung (ME1-ME4) des Systems (10) gemessen worden ist.

4. Verfahren nach einem der voranstehenden Ansprüche,
**dadurch gekennzeichnet, dass**
die zweite Einrichtung einen Bestandteil des technischen Systems (10) bildet, insbesondere eine Leitzentrale (LZ) ist, und die Information (I1) erster Art zumindest einen Messwert (M1-M4) umfasst, den die zweite Einrichtung zur Steuerung und/oder Überwachung des Systems (10) verwertet.

5. Verfahren nach einem der voranstehenden Ansprüche,
**dadurch gekennzeichnet, dass**
die zweite Einrichtung die Schätzung des Systemzustands auf der Basis der zumindest einen Information (I2) zweiter Art und eines angelernten Systems (AS) künstlicher Intelligenz durchführt, das auf der Basis verschiedener Systemzustände (SZ1, SZ2) und korrespondierender, als vertrauenswürdig angesehener Informationen (Iv) angelernt worden ist.

6. Verfahren nach einem der voranstehenden Ansprüche,
**dadurch gekennzeichnet, dass**
die zweite Einrichtung die Schätzung des Systemzustands auf der Basis der zumindest einen Information (I2) zweiter Art und eines fest programmierten Systembeschreibungsmodells durchführt.

7. Verfahren nach Anspruch 6,
**dadurch gekennzeichnet, dass**
- die Information (I1) erster Art, die die erste Einrichtung zu der zweiten Einrichtung übermittelt, zumindest einen Messwert (M1-M4) umfasst, der von einer Messeinrichtung (ME1-ME4) des Systems (10) gemessen worden ist, und
- die Information (I1) erster Art, die die zweite Einrichtung zu der ersten und/oder der zumindest einen weiteren Einrichtung übermittelt, zumindest einen Stellbefehl (ST1-ST3) umfasst, den die erste bzw. die zumindest eine weitere Einrichtung ausführen soll.

8. Verfahren nach einem der voranstehenden Ansprüche 6 bis 7,
**dadurch gekennzeichnet, dass**
die erste, zweite und/oder die zumindest eine weitere Einrichtung die Schätzung des Systemzustands auf der Basis eines angelernten Systems (AS) künstlicher Intelligenz durchführen, das auf der Basis verschiedener Systemzustände und korrespondierender, als vertrauenswürdig angesehener Informationen (Iv) angelernt worden ist.

9. Verfahren nach Anspruch 8,
**dadurch gekennzeichnet, dass**
das System (10) eine Anlerneinrichtung (ALE) umfasst, die das Anlernen von Systemen (AS) künstlicher Intelligenz durchführt, sei es für eine der genannten Einrichtungen, mehrere der genannten Einrichtungen oder alle Einrichtungen des Systems (10), die Informationen (I1) erster Art von einer anderen Einrichtung des Systems (10) erhalten.

10. Verfahren nach Anspruch 9,
**dadurch gekennzeichnet, dass**
die Anlerneinrichtung (ALE) in der zweiten Einrichtung implementiert ist.

11. Verfahren nach einem der voranstehenden Ansprüche 9 bis 10,
**dadurch gekennzeichnet, dass**
die Anlerneinrichtung (ALE) in einer Leitzentrale (LZ) des Systems (10) implementiert ist.

12. Einrichtung eines technisches Systems (10), wobei die Einrichtung geeignet ist, Informationen (I1) erster Art zu empfangen, die sich auf das System (10) beziehen und vom jeweiligen Systemzustand des Systems (10) abhängen,
wobei die Einrichtung dazu ausgestaltet ist,
- zumindest eine Information (I2) zweiter Art, die aus einer anderen Quelle als dem System (10) kommt, zur Schätzung des Systemzustands heranzuziehen,
- anhand des geschätzten Systemzustands (SZ2) zu prüfen, ob die empfangene Information (I1) mit dem geschätzten Systemzustand (SZ2) in einem vorgegebenen Maße korrespondiert, und
- im Falle einer Korrespondenz im vorgegebenen Maße die Information (I1) als vertrauenswürdig anzusehen und andernfalls ein einen möglichen Datenangriff anzeigendes Warnsignal (W) zu erzeugen,
- **dadurch gekennzeichnet, dass**
- es sich bei den Informationen (I2) zweiter Art um mindestens eine der folgenden Informationen handelt: Wetterdaten, Kalenderdaten, aktuelle Strompreise, Strompreisprognosen, und dass
- zumindest eine andere Information (I1) erster Art von der zweiten Einrichtung zu der ersten Einrichtung und/oder zu zumindest einer weiteren Einrichtung übermittelt wird, und die erste bzw. die zumindest eine weitere Einrichtung
- zumindest eine Information (I2) zweiter Art zur Schätzung des Systemzustands heranzieht,
- anhand des geschätzten Systemzustands (SZ2) prüft, ob die empfangene andere Information (I1) mit dem geschätzten Systemzustand (SZ2) in einem vorgegebenen Maße korrespondiert, und
- im Falle einer Korrespondenz im vorgegebenen Maße die andere Information (I1) erster Art von der zweiten und/oder der weiteren Einrichtung als vertrauenswürdig ansieht und andernfalls ein einen Datenangriff anzeigendes Warnsignal (W) erzeugt, wobei
- die zweite Einrichtung ein Feldgerät des technischen Systems (10) ist und insbesondere eine Stelleinrichtung (SE1-SE3) aufweist, und
- die Information (I1) erster Art zumindest einen Stellbefehl (ST1-ST4) umfasst, den die zweite Einrichtung ausführen soll, allerdings nur dann, wenn kein Warnsignal erzeugt wird.

## Claims

1. Method for operating a technical system (10), wherein at least one information element (I1) of a first type which relates to the system (10) and is dependent on the respective system state of the system (10) is transmitted in the method from at least one first facility of the system (10) to at least one second facility,
wherein the system (10) is an energy distribution or energy supply system, and the first and second facility form components of the energy distribution or energy supply system, and wherein the second facility
- uses at least one information element (I2) of a second type which originates neither from the first facility nor from a different facility of the system (10), i.e. comes from a source other than the system (10), to estimate the system state,
- checks, on the basis of the estimated system state (SZ2), whether the received information (I1) matches the estimated system state (SZ2) to a predefined extent, and,
- in the event of a match to the predefined extent, regards the information (I1) as trusted, and otherwise generates a warning signal (W) indicating a possible data attack,
- **characterized in that**
- the information (I2) of a second type is at least one of the following information elements: weather data, calendar data, current electricity prices, electricity price forecasts, and **in that**
- at least one other information element (I1) of a first type is transmitted from the second facility to the first facility and/or to at least one further facility, and the first or the at least one further facility
- uses at least one information element (I2) of a second type to estimate the system state,
- checks, on the basis of the estimated system state (SZ2), whether the received other information (I1) matches the estimated system state (SZ2) to a predefined extent, and
- in the event of a match to the predefined extent, regards the other information (I1) of a first type from the second and/or further facility as trusted, and otherwise generates a warning signal (W) indicating a data attack, wherein
- the second facility is a field device of the technical system (10) and has, in particular, an adjustment facility (SE1-SE3), and
- the information (I1) of a first type comprises at least one adjustment command (ST1-ST4) which the second facility is intended to execute, but only when no warning signal is generated.

2. Method according to Claim 1,
**characterized in that**
- the system (10) comprises a multiplicity of first facilities, and
- the second facility determines an actual system state (SZ1) on the basis of the information (I1) of a first type which it receives from the multiplicity of first facilities, compares said actual system state (SZ1) with the estimated system state (SZ2) and, if the two system states (SZ1, SZ2) match one another to the predefined extent, regards the information (I1) from the first facility (10) as trusted, and otherwise generates the warning signal (W).

3. Method according to one of the preceding claims,
**characterized in that**
the information (I1) of a first type comprises at least one measured value (M1-M4) which has been measured by a measuring facility (ME1-ME4) of the system (10).

4. Method according to one of the preceding claims,
**characterized in that**
the second facility forms a component of the technical system (10), in particular is a control centre (LZ), and the information (I1) of a first type comprises at least one measured value (M1-M4) which the second facility uses to control and/or monitor the system (10).

5. Method according to one of the preceding claims,
**characterized in that**
the second facility performs the estimation of the system state on the basis of the at least one information element (I2) of a second type and a trained artificial intelligence system (AS) which has been trained on the basis of different system states (SZ1, SZ2) and matching information (Iv) regarded as trusted.

6. Method according to one of the preceding claims,
**characterized in that**
the second facility performs the estimation of the system state on the basis of the at least one information element (I2) of a second type and a permanently programmed system description model.

7. Method according to Claim 6,
**characterized in that**
- the information (I1) of a first type which the first facility transmits to the second facility comprises at least one measured value (M1-M4) which has been measured by a measuring facility (ME1-ME4) of the system (10), and
- the information (I1) of a first type which the second facility transmits to the first and/or to the at least one further facility comprises at least one adjustment command (ST1-ST3) which the first or the at least one further facility is intended to execute.

8. Method according to one of the preceding Claims 6 to 7,
**characterized in that**
the first, second and/or the at least one further facility perform the estimation of the system state on the basis of a trained artificial intelligence system (AS) which has been trained on the basis of different system states and matching information (Iv) regarded as trusted.

9. Method according to Claim 8,
**characterized in that**
the system (10) comprises a training facility (ALE) which performs the training of artificial intelligence systems (AS), whether it be for one of said facilities, a plurality of said facilities or all facilities of the system (10) which receive information (I1) of a first type from a different facility of the system (10).

10. Method according to Claim 9,
**characterized in that**
the training facility (ALE) is implemented in the second facility.

11. Method according to one of the preceding Claims 9 to 10,
**characterized in that**
the training facility (ALE) is implemented in a control centre (LZ) of the system (10).

12. Facility for a technical system (10), wherein the facility is suitable for receiving information (I1) of a first type which relates to the system (10) and depends on the respective system state of the system (10),
wherein the facility is designed
- to use at least one information element (12) of a second type which comes from a source other than the system (10) to estimate the system state,
- to check, on the basis of the estimated system state (SZ2), whether the received information (I1) matches the estimated system state (SZ2) to a predefined extent, and
- in the event of a match to the predefined extent, to regard the information (I1) as trusted, and otherwise to generate a warning signal (W) indicating a possible data attack,
- **characterized in that**
- the information (I2) of a second type is at least one of the following information elements: weather data, calendar data, current electricity prices, electricity price forecasts, and **in that**
- at least one other information element (I1) of a first type is transmitted from the second facility to the first facility and/or to at least one further facility, and the first or the at least one further facility
- uses at least one information element (I2) of a second type to estimate the system state,
- checks, on the basis of the estimated system state (SZ2), whether the received other information (I1) matches the estimated system state (SZ2) to a predefined extent, and
- in the event of a match to the predefined extent, regards the other information (I1) of a first type from the second and/or further facility as trusted, and otherwise generates a warning signal (W) indicating a data attack, wherein
- the second facility is a field device of the technical system (10) and has, in particular, an adjustment facility (SE1-SE3), and
- the information (I1) of a first type comprises at least one adjustment command (ST1-ST4) which the second facility is intended to execute, but only when no warning signal is generated.

## Revendications

1. Procédé pour faire fonctionner un système (10) technique, dans lequel dans le procédé on transmet d'au moins un premier dispositif du système (10) à au moins un deuxième dispositif, au moins une information (I1) d'un premier type, qui se rapporte au système (10) et qui dépend de l'état respectif de système du système (10),
dans lequel le système est un système de répartition d'énergie ou d'alimentation en énergie, et les premier et deuxième dispositifs forment des composants du système de répartition d'énergie ou d'alimentation en énergie, et dans lequel le deuxième dispositif
- tire parti, pour l'estimation de l'état du système, d'au moins une information (I2) d'un deuxième type, qui ne provient ni du premier dispositif, ni d'un autre dispositif du système (10), donc qui vient d'une source autre que le système (10),
- contrôle, à l'aide de l'état (SZ2) estimé du système, si l'information (I1) reçue correspond à l'état (SZ2) estimé du système, dans une mesure donnée à l'avance, et
- dans le cas d'une correspondance dans la mesure donnée à l'avance, considère l'information (I1) comme digne de confiance, et sinon, produit un signal (W) d'alerte indiquant qu'une attaque de données est possible,
- **caractérisé en ce que**
- les informations (I2) du deuxième type sont au moins l'une des informations suivantes : données météorologiques, données calendaires, prix en cours du courant, pronostics sur le prix du courant, et **en ce que**,
- on transmet au moins une autre information (I1) du premier type, du deuxième dispositif au premier dispositif et/ou à au moins un autre dispositif, et le premier ou le au moins un autre dispositif,
- tire parti d'au moins une information (I2) du deuxième type pour l'estimation de l'état du système,
- à l'aide de l'état (SZ2) estimé du système, contrôle si l'autre information (I1) reçue correspond dans une mesure donnée à l'avance à l'état (SZ2) estimé du système, et
- dans le cas d'une correspondance dans la mesure donnée à l'avance, considère l'autre information (I1) du premier type, provenant du deuxième et/ou de l'autre dispositif comme digne de confiance, et sinon, produit un signal (W) d'alerte indiquant une attaque de données, dans lequel
- le deuxième dispositif est un appareil sur site du système (10) technique et a, en particulier, un dispositif (SE1-SE3) de réglage, et
- l'information (I1) du premier type comprend au moins une instruction (ST1-ST4) de réglage, que le deuxième dispositif doit exécuter, toutefois seulement si aucun signal d'alerte n'est produit.

2. Procédé suivant la revendication 1,
**caractérisé en ce que**
- le système (10) comprend une pluralité de premiers dispositifs et
- le deuxième dispositif détermine, sur la base des informations (I1) du premier type, qu'il reçoit de la pluralité des premiers dispositifs, un état (SZ1) réel du système, compare celui-ci à l'état (SZ2) estimé du système, et dans le cas d'une coïncidence entre les deux état (SZ1, SZ2) du système, dans la mesure donnée à l'avance, considère l'information (I1) du premier dispositif (10) comme digne de confiance, et produisent, sinon, le signal (W) d'alerte.

3. Procédé suivant l'une des revendications précédentes,
**caractérisé en ce que**
l'information (I1) du premier type, comprend au moins une valeur (M1-M4) de mesure qui a été mesuré par un dispositif (ME1-ME4) de mesures du système (10).

4. Procédé suivant l'une des revendications précédentes,
**caractérisé en ce que**
le deuxième dispositif forme une partie constituante du système (10) technique, en étant, en particulier, une centrale (LZ) de conduite, et l'information (I1) du premier type comprend au moins une valeur (M1-M4) de mesure, que le deuxième dispositif valorise pour la commande et/ou le contrôle du système (10).

5. Procédé suivant l'une des revendications précédentes,
**caractérisé en ce que**
le deuxième dispositif effectue l'estimation de l'état du système sur la base de la au moins une information (I2) du deuxième type et d'un système (AS) ayant subi un apprentissage d'intelligence artificielle, qui a subi un apprentissage sur la base de divers états (SZ1, SZ2) du système et d'informations (Iv) correspondantes, considérées comme digne de confiance.

6. Procédé suivant l'une des revendications précédentes,
**caractérisé en ce que**
le deuxième dispositif effectue l'estimation de l'état du système sur la base de la au moins une information (I2) du deuxième type et d'un modèle de description du système programmé de manière fixe.

7. Procédé suivant la revendication 6,
**caractérisé en ce que**
- l'information (I1) du premier type, que le premier dispositif transmet au deuxième dispositif, comprend au moins une valeur (M1-M4) de mesure qui a été mesurée par un dispositif (M1-M4) de mesure du système (10), et
- l'information (I1) du premier type, que le deuxième dispositif transmet au premier et/ou au au moins un autre dispositif, comprend au moins une instruction (ST1-ST3) de réglage, que le premier ou le au moins un autre dispositif doit exécuter.

8. Procédé suivant l'une des revendications 6 à 7 précédentes,
**caractérisé en ce que**
le premier, deuxième et/ou au moins un autre dispositif, effectuent l'estimation de l'état du système sur la base d'un système (AS) ayant subi un apprentissage de l'intelligence artificielle, qui a subi un apprentissage sur la base de divers états du système et d'informations (IV) correspondantes, considérées comme digne de confiance.

9. Procédé suivant la revendication 8,
**caractérisé en ce que**
le système (10) comprend un dispositif (ALE) d'apprentissage, qui effectue l'apprentissage de système (AS) de l'intelligence artificielle, que ce soit pour l'un des dispositifs mentionnés, plusieurs des dispositifs mentionnés, ou tous les dispositifs du système (10) qui contiennent des informations (I1) du premier type d'un autre dispositif du système (10).

10. Procédé suivant la revendication 9,
**caractérisé en ce que**
le dispositif (ALE) d'apprentissage est mis en oeuvre dans le deuxième dispositif.

11. Procédé suivant l'une des revendications 9 à 10 précédentes,
**caractérisé en ce que**
le dispositif (ALE) d'apprentissage est mis en oeuvre dans une centrale (LZ) de conduite du système (10).

12. Dispositif d'un système (10) technique, dans lequel le dispositif est propre à recevoir des informations (I1) d'un premier type, qui se rapportent au système (10) et qui dépendent de l'état respectif de système du système (10), dans lequel le dispositif est conformé
- pour tirer parti, pour l'estimation de l'état du système, d'au moins une information (I2) d'un deuxième type, qui provient d'une source autre que le système (10),
- pour contrôler, à l'aide de l'état (SZ2) estimé du système, si l'information (I1) reçue correspond, dans une mesure donnée à l'avance, à l'état (SZ2) estimé du système, et
- dans le cas d'une correspondance dans la mesure donnée à l'avance, pour considérer l'information (I1) comme digne de confiance, et sinon, produire un signal (W) d'alerte indiquant la possibilité d'une attaque de données,
- **caractérisé en ce que**
- les informations (I2) du deuxième type sont au moins l'une des informations suivantes : données météorologiques, données calendaires, prix en cours du courant, pronostics sur le prix du courant, et **en ce que**
- l'on transmet au moins une autre information (I1) du premier type, du deuxième dispositif au premier dispositif et/ou à au moins un autre dispositif, et le premier ou le au moins un autre dispositif
- tire parti d'au moins une information (I2) du deuxième type pour l'estimation de l'état du système,
- à l'aide de l'état (SZ2) estimé du système, contrôle si l'autre information (I1) reçue correspond, dans une mesure donnée à l'avance, à l'état (SZ2) estimé du système, et
- dans le cas d'une correspondance dans la mesure donnée à l'avance, considère l'autre information (I1) du premier type, provenant du deuxième et/ou de l'autre dispositif, comme digne de confiance, et sinon, produit un signal (W) d'alerte indiquant une attaque de données, dans lequel
- le deuxième dispositif est un appareil sur site du système (10) technique et a, en particulier, un dispositif (SE1-SE3) de réglage, et
- l'information (I1) du premier type comprend au moins une instruction (ST1-ST4) de réglage, que le deuxième dispositif doit exécuter, toutefois seulement si aucun signal d'alerte n'est produit.
